# EUROPÄISCHE PATENTSCHRIFT

(11) **EP 1 961 107 B1**
(45) Veröffentlichungstag und Bekanntmachung des Hinweises auf die Patenterteilung: **16.10.2019**
(21) Anmeldenummer: 06829471.9
(22) Anmeldetag: 09.12.2006
(51) Int. Cl.: H02P 6/18

(54) **VORRICHTUNG UND VERFAHREN ZUR ERMITTLUNG DER DREHLAGE DES ROTORS EINER ELEKTRISCHEN MASCHINE**
DEVICE AND METHOD FOR DETERMINING THE ROTATIONAL POSITION OF A ROTOR IN AN ELECTRIC MACHINE
PROCEDE ET DISPOSITIF POUR DETERMINER LA POSITION DE ROTATION DU ROTOR D'UNE MACHINE ELECTRIQUE

(30) Priorität: 15.12.2005 DE 102005059858; 29.09.2006 DE 102006046638
(43) Veröffentlichungstag der Anmeldung: 27.08.2008
(73) Patentinhaber: Strothmann, Rolf, 66740 Saarlouis (DE)
(72) Erfinder: Strothmann, Rolf, 66740 Saarlouis (DE)
(74) Vertreter: Bernhardt, Reinhold
(86) Internationale Anmeldenummer: PCT/EP2006/011879
(87) Internationale Veröffentlichungsnummer: WO 2007/073853

(56) Entgegenhaltungen:
- EP-A- 1 160 966
- WO-A-2004/032316
- WO-A-2005/046043
- US-A1- 5 159 246
- US-A1- 2005 073 274
- US-B1- 6 366 037

## Beschreibung

Die Erfindung betrifft eine Vorrichtung zur Ermittlung der Drehlage des Rotors einer im Stern verschaltete Polwicklungsphasenstränge aufweisenden elektrischen Maschine gemäß Oberbegriff des Anspruchs 1.

Eine Vorrichtung solcher Art geht aus der EP 1 005 716 B1 hervor. Die Möglichkeit zur Bestimmung der Rotordrehlage während des Motorbetriebs durch Anlegen von Impulsen an Phasenstränge insbesondere vielpoliger elektrischer Maschinen beruht darauf, dass die Induktivität der Phasenstränge innerhalb einer halben magnetischen Periode eine eindeutige Funktion des Drehwinkels Φ des Rotors ist, wie dies aus der genannten, hier einbezogenen EP 1 005 716 B1 hervorgeht. Messspannungsimpulse können daher im Sternpunkt ein Potentialsignal erzeugen, das von der jeweiligen Induktion des Phasenstrangs abhängt und daher ein Maß für die Stellung des Rotors innerhalb der halben magnetischen Periode sein kann.

Eine weitere Vorrichtung der eingangs genannten Art geht aus der US-A1-5159246 hervor. Bei dieser bekannten Vorrichtung wird im Stillstand des Rotors durch jeweils zwei von drei Phasensträngen U,V,W ein Messstrom geleitet, wobei alle sechs Stromflussmöglichkeiten genutzt werden. Der jeweils dritte Phasenstrang ist von der Betriebsspannungsquelle getrennt. Als Messsignal ermittelt wird ein sich infolge des Messstroms am Sternpunkt zeitabhängig entwickelndes Potential.

Der Erfindung liegt die Aufgabe zugrunde, eine neue Vorrichtung zu schaffen, die auf einfache Weise eine genaue Bestimmung der Rotordrehlage ermöglicht.

Diese Aufgabe wird durch die im Anspruch 1 angegebenen Merkmale gelöst.

Erfindungsgemäß werden Messspannungsimpulse zeitversetzt nacheinander an die Phasenstränge gelegt und Differenzen zwischen den durch die Spannungsimpulse erzeugten Sternpunktpotentialen gebildet.

Wie die Potentiale selbst hängt auch die Differenz von der sich mit dem Drehwinkel Φ ändernden Induktivität der Phasenstränge und damit der Position des Rotors innerhalb einer halben magnetischen Periode ab und kann dementsprechend ein Maß für die Drehlage des Rotors sein. Vorteilhaft werden durch die Differenzbildung Schwankungen eines Untergrundsignals, die sich auf die unterschiedlichen Phasenstränge in gleichem Maße auswirken, eliminiert.

Vorzugsweise werden an Phasenstränge jeweils zeitversetzt zu den übrigen Spannungsimpulsen ein Messspannungsimpuls angelegt, die größtmögliche Zahl von Differenzen zwischen den Sternpunktpotentialen mit unterschiedlichem Betrag gebildet, das Vorzeichen der Differenzen ermittelt und die Differenzen miteinander verglichen. Innerhalb einer halben magnetischen Periode bilden die Differenzen wie die Sternpunktpotentiale selbst eine periodische, annähernd sinusförmige Funktion des Drehwinkels Φ. Bei drei Phasen sind diese Funktionen gegeneinander um 120° phasenverschoben. Es ergeben sich innerhalb einer halben magnetischen Periode zwölf Intervalle (i), die dadurch unterscheidbar sind, dass darin die Differenzen unterschiedliche Vorzeichen haben und unterschiedlich groß sind. Allein durch Bestimmung der Vorzeichen und Vergleich der Differenzen untereinander lässt sich dann das Drehwinkelintervall (i) ermitteln, in welchem der Rotor gerade liegt. Eine genauere Bestimmung der Rotordrehlage innerhalb der Intervalle (i) kann dann gestützt auf arcsin- oder arctan-Funktionen erfolgen.

Die Erfindung wird nachfolgend anhand von Ausführungsbeispielen und der beiliegend, sich auf diese Ausführungsbeispiele beziehenen Zeichnungen näher erläutert. Es zeigen:
- Fig. 1: eine schematische Darstellung einer elektrischen Maschine mit einer Vorrichtung zur Ermittlung der Drehlage des Rotors nach der Erfindung,
- Fig. 2: eine das Anlegen von Messspannungsimpulsen an die Phasenstränge der elektrischen Maschine erläuternde Darstellung,
- Fig. 3: eine die Ermittlung der Drehlage des Rotors erläuternde Darstellung,
- Fig. 4: eine zur Erfassung von Sternpunktpotentialen und zur Differenzbildung zwischen den erfassten Sternpunktpotentialen verwendbare Schaltung,
- Fig. 5: eine weitere, die Anlage von Messspannungsimpulsen an die Phasenstränge erläuternde Darstellung. und
- Fig. 6: den Zusammenhang zwischen dem die Polwicklungen durchsetzenden Magnetfeld H der elektrischen Maschine und der Induktion B in den Polwicklungen bzw. der Induktivität L der Polwicklungen.

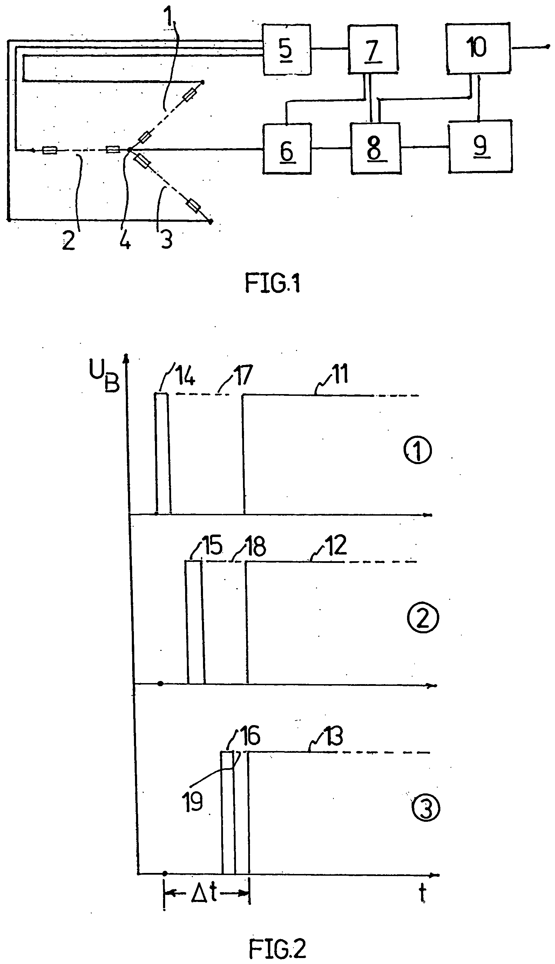

Fig. 1 zeigt Phasenstränge 1 bis 3 der Polwicklungsschaltung einer im übrigen nicht gezeigten 3-phasigen elektrischen Maschine. In dem betrachteten Ausführungsbeispiel weist die Maschine eine Vielzahl magnetischer Perioden auf, denen ein Drehwinkel ΔΦ entspricht, welcher wesentlicher kleiner als 360° ist und beispielsweise 12° beträgt.

Die in einem Sternpunkt 4 miteinander verbundenen Phasenstränge 1 bis 3 sind an ihrem dem Sternpunkt fernen Ende jeweils mit einer Spannungsversorgungsschaltung 5 verbunden, durch welche die elektrische Maschine nach dem Impulsweitenmodulationsverfahren betrieben wird.

Der Sternpunkt 4 ist verbunden mit einer das Potential bzw. die Spannung U am Sternpunkt 4 erfassenden Einrichtung 6 die ihrerseits mit einer Steuereinrichtung 7 in Verbindung steht, welche ferner die Spannungsversorgung der elektrischen Maschine durch die Schaltung 5 steuert.

Die der Erfassung des Sternpunktpotentials dienende Einrichtung 6 ist ausgangsseitig verbunden mit einer Einrichtung 8, welche, gesteuert durch die Einrichtung 7, Differenzen M zwischen Spannungswerten U bildet, welche die Spannungserfassungseinrichtung 6 als Ausgangswerte liefert.

Durch die Differenzbildungseinrichtung 8 ermittelte Spannungsdifferenzwerte sind einer Vergleichs- und Klassifizierungseinrichtung 9 zuführbar, welche aus den Spannungsdifferenzwerten M ein für die Drehlage des Rotors der elektrischen Maschine maßgebendes Drehwinkelintervall (i) innerhalb einer halben magnetischen Periode ΔΦ/2 ermittelt.

Eine mit den Einrichtungen 8 und 9 verbundene Berechnungseinrichtung 10 bestimmt dann die genaue Drehlage des Rotors innerhalb der halben magnetischen Periode.

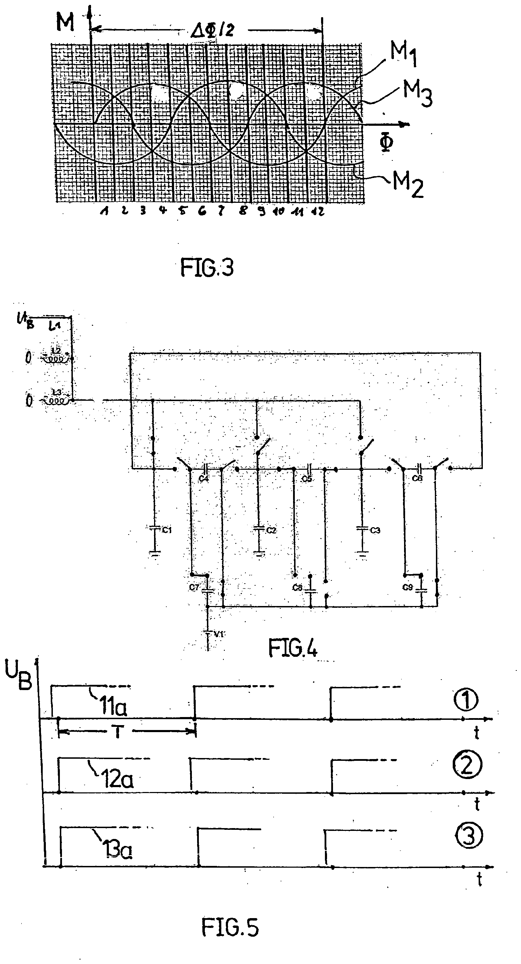

Es versteht sich, dass die Einrichtungen 7 bis 10 zweckmäßig durch Computersoftware implementiert sind. Doch kommt insbesondere für die Einrichtungen 6 und 8 auch eine sehr einfache, weiter unten anhand von Fig. 4 erläuterte Schaltung mit fester Verdrahtung in Betracht.

Gemäß Fig. 2 werden im Rahmen der Impulsweitenmodulation Betriebsspannungsimpulse 11 bis 13 einer Batteriespannung UB in jedem Modulationszyklus (oder in ausgewählten Modulationszyklen) um Δt zeitverzögert an die jeweiligen Phasenstränge 1 bis 3 angelegt. Während des Zeitraums Δt durch die Schaltung 5 angelegte, von den Betriebsspannungsimpulsen 11 bis 13 getrennte Messspannungsimpulse 14 bis 16 sind zueinander zeitversetzt.

Die Messspannungsimpulse 14 bis 16 erzeugen am Sternpunkt 4 entsprechend zeitversetzte Spannungssignale U1, U2 und U3, welche die mit der Erzeugung der Messspannungsimpulse 14 bis 16 durch die Steuereinrichtung 7 zeitgleich aktivierte Einrichtung 6 erfasst.

Entsprechend der Abhängigkeit der Induktivität der Phasenstränge 1 bis 3 vom Drehwinkel Φ innerhalb einer halben magnetischen Periode ΔΦ/2 ergibt sich abhängig vom Drehwinkel Φ innerhalb der halben magnetischen Periode für die Spannungssignale U1, U2 und U3 jeweils ein periodischer, annähernd sinusförmiger Verlauf, wobei die drei Spannungssignale zueinander um 120° phasenverschoben sind.

Aus den Spannungssignalen U1, U2 und U3 bildet die Einrichtung 3 Differenzen M1 = U1-U2, M2 = U2-U3 und M3 = U3-U1. Drei weitere mögliche Differenzen unterscheiden sich von diesen Differenzen nur im Vorzeichen.

Die Abhängigkeit dieser Differenzen vom Drehwinkel Φ ist in Fig. 3 dargestellt.

Auch die in Fig. 3 gezeigten, etwa sinusförmigen periodischen Kurven M1 (Φ), M2 (Φ) und M3 (Φ) sind um 120° zueinander phasenverschoben. Eine volle Periode dieser Kurven entspricht jeweils einer halben magnetischen Periode.

Wie Fig. 3 ferner zu entnehmen ist, ergeben sich innerhalb einer vollen Periode der Kurve M1 zwölf Intervalle i = 1 bis 12, für die gilt:

| | | | | |
|---|---|---|---|---|
| i = 1: | M1 positiv, | M2 negativ, | M3 positiv, | M1 kleiner M3 |
| i = 2: | M1 positiv, | M2 negativ, | M3 positiv, | M1 größer M3 |
| i = 3: | M1 positiv, | M2 negativ, | M3 negativ, | M2 kleiner M3 |
| i = 4: | M1 positiv, | M2 negativ, | M3 negativ, | M2 größer M3 |
| i = 5: | M1 positiv, | M2 positiv, | M3 negativ, | M1 größer M2 |
| i = 6: | M1 positiv, | M2 positiv, | M3 negativ, | M1 kleiner M2 |
| i = 7: | M1 negativ, | M2 positiv, | M3 negativ, | M1 größer M3 |
| i = 8: | M1 negativ, | M2 positiv, | M3 negativ, | M1 kleiner M3 |
| i = 9: | M1 negativ, | M2 positiv, | M3 positiv, | M1 größer M3 |
| i = 10: | M1 negativ, | M2 positiv. | M3 positiv, | M1 kleiner M3 |
| i = 11: | M1 negativ, | M2 negativ, | M3 positiv, | M1 kleiner M2 |
| i = 12: | M1 negativ, | M2 negativ, | M3 positiv, | M1 größer M2. |

Durch Bestimmung des Vorzeichens dreier ermittelter Differenzwerte M1, M2 und M3 und durch Vergleich dieser Werte untereinander kann die Vergleichs- und Klassifizierungseinrichtung 9 das Drehwinkelintervall (i) ermitteln, in welchem der Rotor gerade liegt.

Die genaue Berechnung der Drehlage innerhalb der Intervalle (i) durch die Einrichtung 10 erfolgt gestützt auf arcsin- oder/und arctan-Funktionen, die vorzugsweise auf Differenzen der Potentialverläufe angewandt werden. Die Phasenveränderung und damit auch die Fortschaltung der Intervalle kann durch Beobachtung von Schaltzuständen ermittelt werden, die auch in der normalen Nutzbestromung vorkommen bzw. sich durch geringe Modifikation (zeitversetztes Ein- und Ausschalten) erzeugen lassen.

Die Einrichtungen 6 und 8 können die in Fig. 4 gezeigte Schaltung aufweisen, welche Kondensatoren C1 bis C9 zur Erfassung der Potentiale am Sternpunkt bzw. zur Differenzbildung benutzt. Die Spannungen U1, U2 und U3 liegen über den Kondensatoren C1, C2 und C3. Über die Kondensatoren C4, C5 und C6 erfolgt die Differenzbildung, so dass die Differenzsignale M1, M2 und M3 über den Kondensatoren C7, C8 und C9 liegen.

Zur Ermittlung des Gesamtdrehwinkels Φ kann eine Zähleinrichtung vorgesehen sein, welche die durchlaufenden halben magnetischen Perioden je nach Drehrichtung addiert bzw. subtrahiert.

Zur Bestimmung der Anfangsdrehlage ist zu unterscheiden, ob die halbe magnetische Periode, in welcher der Rotor liegt, einen Nordpol oder einen Südpol betrifft. Dies kann durch geeignete Bestromung der elektrischen Maschine (ohne Drehmomenterzeugung) erfolgen, indem ermittelt wird, ob eine Stromerhöhung zu einer Erhöhung oder Verringerung der Phasenstranginduktivität führt.

Abweichend von dem in Fig. 2 gezeigten Ausführungsbeispiel könnten statt zeitversetzter Schaltung gesonderter Impulse auch die Betriebsspannungsimpulse 11 bis 13 zu unterschiedlichen Zeitpunkten eingesetzt werden, wie dies durch Strichlinien 17 bis 19 angedeutet ist.

Fig. 5 zeigt die Möglichkeit, in drei aufeinander folgenden Modulationsperioden T den Betriebsspannungsimpuls 11a, 12a bzw. 13a für jeweils einen der Phasenstränge 1 bis 3 vorzeitig einsetzen lassen.

Insgesamt sind auf diese Weise sogar sechs zur Drehlageermittlung nutzbare Schaltzustände herstellbar, indem die betreffenden Impulse nicht nur vorzeitig sondern auch zeitverzögert eingeschaltet werden.

Insgesamt sechs Schaltzustände lassen sich auch durch gesonderte während der Zeit Δt (Fig. 2) angelegte Messspannungsimpulse erzeugen, indem sich die Impulse zeitlich geeignet überlappen.

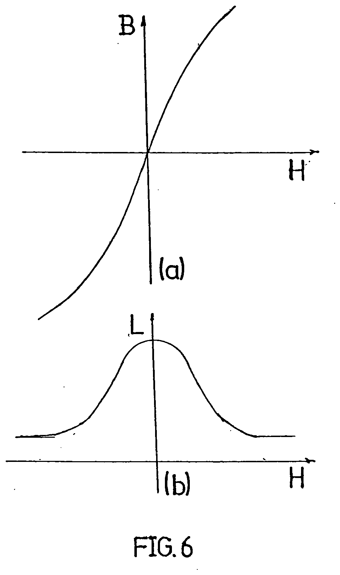

Die oben erwähnte Änderung der Induktivität der Polwicklungen der Phasenstränge 1 bis 3 beruht auf dem in Fig. 6a gezeigten Zusammenhang zwischen dem die Polwicklungen der Phasenstränge durchsetzenden Magnetfeld H des Läufers und dem sich in den Eisen enthaltenden Polwicklungen ergebenden Induktionsfeld B. Je nach Drehstellung des Rotors innerhalb einer halben magnetischen Periode ändert sich das durch das H-Feld der Permanentmagnete des Läufers erzeugte B-Feld in den Polwicklungen der Phasenstränge. Mit der Änderung des B-Feldes ändert sich auch die Steigung dB/dH, welche der Induktivität der Phasenstränge proportional ist. Fig. 6b zeigt die sich in Abhängigkeit vom H-Feld ergebende Induktivität L.

Am Sternpunkt wird die jeweils an einen der Phasenstränge 1 bis 3 angelegte Impulsspannung U_{B} geteilt, wobei sich je nach Drehlage des Rotors unterschiedliche Teilungsverhältnisse und damit unterschiedliche Potentiale am Sternpunkt ergeben. Maßgebend für das Teilungsverhältnis sind der induktive Widerstand des jeweils mit der Spannung U_{B} beaufschlagten Phasenstrangs und der induktive Widerstand der Parallelschaltung der beiden anderen Phasenstränge. Aufgrund der Symmetrie der Kurve L(H) in bezug auf die L-Achse kann jedoch nicht unterschieden werden, ob die halbe magnetische Periode, innerhalb welcher die Rotordrehlage ermittelt wurde, durch einen Nordpol oder einen Südpol gebildet ist.

Um festzustellen, ob die halbe magnetische Periode einen Nord- oder Südpol betrifft, erfolgt in dem hier beschriebenen Ausführungsbeispiel ausgehend von der Kenntnis der Drehlage innerhalb der halben magnetischen Periode eine Bestromung der elektrischen Maschine durch Impulsweitenmodulation derart, dass der aus den Phasenstrangströmen resultierende, durch die Gesamtheit der Polwicklungen erzeugte Feldvektor 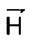 bzw. 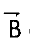 eine erste, genau auf die Mitte, zwischen zwei Polen des Läuferfelds gerichtete Komponente und eine zweite, genau auf einen Pol des Läuferfeldes gerichtete Komponente gebildet ist. Bezogen auf die magnetische Periode des Läuferfeldes schließen die beiden Komponenten also einen Phasenwinkel von 90° ein. So erzeugt nur die erste Komponente ein Drehmoment, die zweite Komponente, die einen Blindstrom darstellt, liefert zum Drehmoment der elektrischen Maschinen keinen Beitrag.

Der zusätzliche Blindstrom sorgt jedoch für eine Veränderung des H-Feldes und damit auch des B-Feldes in den Polwicklungen der Phasenstränge. Wird angenommen, die Polwicklungen eines ausgewählten Phasenstranges des Rotors stehen vor einem Nordpol, so kann die zweite Stromkomponente z.B. so erzeugt werden dass das die Polwiklungen durchsetzende H-Feld geschwächt wird und die Induktivität L dieser Polwicklungen entsprechend zunimmt, wenn diese Annahme zutrifft. Der "Arbeitspunkt" wandert dann im positiven Teil der Kurve L(H) in Fig. 6b nach links. War die Annahme falsch und die Polwicklungen stehen in Wirklichkeit vor einem Südpol, so führt dies zu einer Vergrößerung des Betrages des die Polwicklungen durchsetzenden Feldes. Der "Arbeitspunkt" wandert dann im negativen Teil der Kurve L(H) nach links. Die Induktivität L nimmt ab.

Die Abnahme oder Zunahme der Induktivität führt dazu, dass der aus den Signalen M1 bis M3 resultierende, mit dem Winkel Φ umlaufende Zeiger seiner Länge nach zu- oder abnimmt. Aus der Längenänderung lässt sich auf einen Nord- oder Südpol schließen.

Die Beobachtung eines längenveränderlichen Zeigers ließe sich auch im Rahmen der normalen Betriebsbestromung durch Impulsweitenmodulation ohne gesonderte Messspannungsimpulse 14 bis 16 durchführen.

## Patentansprüche

1. Vorrichtung zur Ermittlung der Drehlage des Rotors einer im Stern verschaltete Polwicklungsphasenstränge (1-3) aufweisenden elektrischen Maschine, mit einer Einrichtung (5,7) zum Anlegen von Spannungsimpulsen (14-16; 11a-13a) an die Phasenstränge (1-3) und einer Einrichtung (6,8), welche zur Ermittlung der Drehlage des Rotors durch die Spannungsimpulse erzeugte Sternpunktpotentiale (U1,U2,U3) auswertet,
**dadurch gekennzeichnet,**
**dass** die erstgenannte Einrichtung (5,7) zum Anlegen der Spannungsimpulse (14-16; 11a-13a) im Motorbetrieb der elektrischen Maschine durch Impulsweitenmodulation innerhalb einer oder/und mehrerer Modulationsperioden (T) jeweils zeitversetzt zu den übrigen Impulsen aufeinanderfolgend an alle Phasenstränge angepasst ist, wobei es sich bei den Spannungsimpulsen um gesonderte, zusätzlich und zeitversetzt zu den Betriebsspannungsimpulsen erzeugte Impulse (14-16) oder um Betriebsspannungsimpulse (11a-13a) selbst handelt und wobei der Zeitversatz zwischen den Impulsen so gering ist, dass eine Änderung der Rotorposition zwischen den Impulsen vernachlässigbar ist, und dass die zweitgenannte Einrichtung (6,8) zur Ermittlung der Rotordrehlage anhand der Differenzen (M1,M2,M3) zwischen zeitgleich mit den Spannungsimpulsen (14-16;11a-13a) erzeugten Sternpunktpotentialen (U1,U2,U3) angepasst ist, wobei die zweitgenannte Einrichtung ferner zur Bildung der größtmöglichen Zahl von Differenzen mit unterschiedlichem Betrag, zur Bestimmung des Vorzeichens der Differenzen und zum Vergleich der Differenzen miteinander angepasst ist, um ein Drehwinkelintervall (i) zu ermitteln, in welchem der Rotor liegt, wobei die Differenzen wie die Sternpunktpotentiale selbst eine periodische, annähernd sinusförmige Funktion des Drehwinkels Φ bilden.

2. Vorrichtung nach Anspruch 1,
**gekennzeichnet durch** eine weitere Einrichtung, die zur Gewinnung weiterer, insbesondere die Ausrichtung der Polwicklungen eines ausgewählten Phasenstrangs zu einem Nord- oder Südpol betreffender, Informationen über den Zustand der Maschine ein durch Änderung der Induktivität von Polwicklungsphasensträngen der elektrischen Maschine infolge Stromfluss durch die Phasenstränge beeinflusstes Messsignal auswertet.

3. Vorrichtung nach Anspruch 2,
**dadurch gekennzeichnet,**
**dass** der die Induktivität der Polwicklungsphasenstränge (1-3) ändernde Strom ein im Rahmen der normalen Bestromung der elektrischen Maschine fließender Strom oder ein durch die genannte weitere Einrichtung erzeugter, gesonderter Strom ist.

4. Vorrichtung nach Anspruch 3,
**dadurch gekennzeichnet,**
**dass** die Einrichtung zur Erzeugung des Stromes derart vorgesehen ist, dass der Strom das Drehmoment der elektrischen Maschine nicht beeinflusst.

5. Vorrichtung nach Anspruch 4,
**dadurch gekennzeichnet,**
**dass** der Strom eine Komponente eines resultierenden Stromvektors ist, welche mit einer ein Drehmoment erzeugenden Komponente dieses Stromvektors, bezogen auf die magnetische Periode, einen Phasenwinkel von 90° einschließt.

6. Vorrichtung nach einem der Ansprüche 1 bis 5,
**dadurch gekennzeichnet,**
**dass** das Messsignal durch eine Änderung des Verhältnisses der Induktivitäten der Polwicklungsphasenstränge (1-3) beeinflusst ist.

7. Vorrichtung nach Anspruch 6,
**dadurch gekennzeichnet,**
**dass** das Messsignal das Potential am Sternpunkt im Stern verschalteter Phasenstränge (1-3) ist.

## Claims

1. Apparatus for ascertaining the rotational position of the rotor of an electrical machine having pole winding phase sections (1-3) which are connected in star, comprising a device (5, 7) for applying voltage pulses (14-16; 11a-13a) to the phase sections (1-3) and comprising a device (6, 8) which evaluates star point potentials (U1, U2, U3), which are generated by the voltage pulses, for ascertaining the rotational position of the rotor,
**characterized**
**in that** the first-mentioned device (5, 7) is suitable for applying the voltage pulses (14-16; 11a-13a) to all phase sections during motor operation of the electrical machine by pulse-width modulation within one or/and several modulation periods (T) in each case with a time delay in relation to the other pulses in succession, wherein the voltage pulses are separate pulses (14-16) which are generated in addition to and with a time delay in relation to the operating voltage pulses or are operating voltage pulses (11a-13a) themselves, and wherein the time delay between the pulses is so low that a change in the rotor position between the pulses is negligible, and in that the second-mentioned device (6, 8) is suitable for ascertaining the rotor rotational position on the basis of the differences (M1, M2, M3) between star point potentials (U1, U2, U3) which are generated simultaneously with the voltage pulses (14-16; 11a-13a), wherein the second-mentioned device is further suitable for forming the largest possible number of differences with different magnitudes, for determining the mathematical sign of the differences and for comparing the differences to one another in order to ascertain a rotation angle interval (i) in which the rotor lies, wherein the differences, like the star point potentials themselves, form a periodic, approximately sinusoidal function of the rotation angle Φ.

2. Apparatus according to Claim 1,
**characterized by** a further device which, for obtaining further information, relating in particular to the orientation of the pole windings of a selected phase section in relation to a north or south pole, about the state of the machine, evaluates a measurement signal which is influenced by a change in the inductance of pole winding phase sections of the electrical machine as a result of current flow through the phase sections.

3. Apparatus according to Claim 2,
**characterized**
**in that** the current which changes the inductance of the pole winding phase sections (1-3) is a current which flows during the normal energization of the electrical machine or a separate current which is generated by the said further device.

4. Apparatus according to Claim 3,
**characterized**
**in that** the device for generating the current is provided in such a way that the current does not influence the torque of the electrical machine.

5. Apparatus according to Claim 4,
**characterized**
**in that** the current is a component of a resulting current vector which, with a component of this current vector, which component generates a torque, forms, with respect to the magnetic period, a phase angle of 90°.

6. Apparatus according to one of Claims 1 to 5,
**characterized**
**in that** the measurement signal is influenced by a change in the ratio of the inductances of the pole winding phase sections (1-3).

7. Apparatus according to Claim 6,
**characterized**
**in that** the measurement signal is the potential at the star point in the phase sections (1-3) which are connected in star.

## Revendications

1. Dispositif pour déterminer la position de rotation du rotor d'une machine électrique présentant plusieurs conducteurs de phase d'enroulement polaire (1 - 3) branchés en étoile, comportant
un moyen (5, 7) pour appliquer des impulsions de tension (14 - 16 ; 11a - 13a) aux conducteurs de phase (1 - 3) et un moyen (6, 8) qui évalue des potentiels de point neutre (U1, U2, U3) générés par les impulsions de tension pour déterminer la position de rotation du rotor,
**caractérisé en ce que**
en fonctionnement moteur de la machine électrique, le moyen (5, 7) mentionné en premier est adapté à appliquer les impulsions de tension (14 - 16 ; 11a - 13a) de façon décalée dans le temps par rapport aux autres impulsions successivement à tous les conducteurs de phase par modulation de largeur d'impulsion à l'intérieur d'une et/ou de plusieurs périodes de modulations (T), les impulsions de tension étant des impulsions (14 - 16) séparées générées en supplément et de façon décalée dans le temps par rapport aux impulsions de tension de fonctionnement ou étant des impulsions de tension de fonctionnement (11a - 13a) elles-mêmes, et le décalage dans le temps entre les impulsions étant si faible qu'une modification de la position du rotor entre les impulsions est négligeable, et **en ce que**
le moyen (6, 8) mentionné en second est adapté à déterminer la position de rotation du rotor basant sur les différences (M1, M2, M3) entre des potentiels de point neutre (U1, U2, U3) générés simultanément avec les impulsions de tension (14 - 16 ; 11a - 13a), le moyen mentionné en second étant adapté en outre pour former le plus grand nombre possible de différences ayant différents montants, pour déterminer le signe des différences et pour comparer les différences entre elles, afin de déterminer un intervalle d'angle de rotation (i) dans lequel se situe le rotor, les différences formant une fonction périodique approximativement sinusoïdale de l'angle de rotation φ, tout comme les potentiels de point neutre eux-mêmes.

2. Dispositif selon la revendication 1,
**caractérisé par** un autre moyen qui évalue un signal de mesure influencé par une modification de l'inductance de conducteurs de phase d'enroulement polaire de la machine électrique suite à une circulation de courant à travers les conducteurs de phase, en vue de récupérer d'autres informations relatives à l'état de la machine concernant en particulier l'orientation des enroulements polaires d'un conducteur de phase choisi par rapport au pôle Nord ou Sud.

3. Dispositif selon la revendication 2,
**caractérisé en ce que**
le courant modifiant l'inductance des conducteurs de phase d'enroulement polaire (1 - 3) est un courant circulant dans le cadre de l'alimentation normale d'une machine électrique ou un courant séparé généré par l'autre moyen mentionné.

4. Dispositif selon la revendication 3,
**caractérisé en ce que**
le moyen pour générer le courant est prévu de telle sorte que le courant n'influence pas le couple de rotation de la machine électrique.

5. Dispositif selon la revendication 4,
**caractérisé en ce que**
le courant est une composante d'un vecteur de courant résultant qui définit un angle de phase de 90° ensemble avec une composante générant un couple de rotation de ce vecteur de courant, par rapport à la période magnétique.

6. Dispositif selon l'une des revendications 1 à 5,
**caractérisé en ce que**
le signal de mesure est influencé par une modification du rapport des inductances des conducteurs de phase d'enroulement polaire (1 - 3).

7. Dispositif selon la revendication 6,
**caractérisé en ce que**
le signal de mesure est le potentiel au point neutre de conducteurs de phase (1 - 3) branchés en étoile.
